# EUROPEAN PATENT SPECIFICATION

(11) **EP 3 843 378 B1**
(45) Date of publication and mention of the grant of the patent: **29.04.2026**
(21) Application number: 20215279.9
(22) Date of filing: 18.12.2020
(51) Int. Cl.: H04N 23/61, H04N 23/68, H04N 23/80

(54) **IMAGE PROCESSING APPARATUS, IMAGE CAPTURING APPARATUS AND IMAGE PROCESSING METHOD**
BILDVERARBEITUNGSGERÄT, BILDERFASSUNGSGERÄT UND BILDERVERARBEITUNGSVERFAHREN
APPAREIL DE TRAITEMENT D'IMAGES, APPAREIL DE CAPTURE D'IMAGES ET PROCÉDÉ DE TRAITEMENT D'IMAGES

(30) Priority: 20.12.2019 JP 2019230974; 25.09.2020 JP 2020160318
(43) Date of publication of application: 30.06.2021
(73) Proprietor: CANON KABUSHIKI KAISHA, OHTA-KU Tokyo 146-8501 (JP)
(72) Inventor: OMATA, Takeshi, Ohta-ku,, Tokyo 146-8501 (JP); WAKAMATSU, Nobushige, Ohta-ku,, Tokyo 146-8501 (JP)
(74) Representative: TBK

(56) References cited:
- GB-A- 2 582 197
- JP-A- 2019 118 098
- US-A1- 2017 351 900
- US-B2- 9 883 104

## Description

### BACKGROUND OF THE INVENTION

### Field of the Invention

The present invention relates to an image processing technique for correcting a tilt of a captured image.

### Description of the Related Art

JP 2017 58660 A discloses a technique that detects a tilt angle of an image capturing apparatus such as a digital camera with a shake sensor such as an acceleration sensor, and electronically rotates a part (clipping area) of a captured image depending on the detected tilt angle with enlargement thereof to acquire a tilt-corrected image. US 2017/351900 A1 discloses an image processing apparatus including a correction unit configured to receive, from an object information acquiring unit, information on a tilt of a face included in image data generated by an image capturing apparatus and to perform, using the information on the tilt, tilt correction on the image data. US 9 883 104 B2 discloses a control apparatus that includes a first angle calculating unit configured to calculate a first angle based on an acceleration detected by an acceleration detector, an analyzing unit configured to analyze a vibration state based on at least one of the acceleration and an angular velocity detected by an angular velocity detector, a second angle calculating unit configured to calculate a second angle based on the angular velocity, the first angle, and the vibration state, and a correcting unit configured to perform tilt correction based on the second angle.

However, in such tilt correction of the captured image, a large tilt correction angle makes the clipping area small, which increases an enlargement amount of the clipping area. Thereby, a resolution of the tilt-corrected image is lowered.

On the other hand, the degree of necessity of the tilt correction differs depending on objects to be captured. For example, when the object is a building or a landscape, the degree of necessity of the tilt correction is high, but when the object is a plant or a face, the degree of necessity of the tilt correction is low.

### SUMMARY OF THE INVENTION

The present invention provides an image processing apparatus, an image capturing apparatus and an image processing method that are capable of appropriately performing tilt correction on a captured image depending on objects.

The present invention in its first aspect provides an image processing apparatus as specified in claims 1 to 6.

The present invention in its second aspect provides an image capturing apparatus as specified in claims 7 to 9.

The present invention in its third aspect provides an image processing method as specified in claim 10.

The present invention in its fourth aspect provides a computer program as specified in claim 11.

Further features of the present invention will become apparent from the following description of exemplary embodiments with reference to the attached drawings.

### BRIEF DESCRIPTION OF THE DRAWINGS

FIG. 1 illustrates a camera shake in Embodiment 1 of the present invention.
FIG. 2 is a block diagram illustrating a configuration of a camera in Embodiment 1.
FIG. 3 is a flowchart of a tilt correction amount switching process in Embodiment 1.
FIG. 4 is a flowchart of a tilt correction amount switching process in Embodiment 2 of the present invention.
FIG. 5 is a flowchart of an automatic image capturing process in Embodiment 3 of the present invention.
FIG. 6 illustrates tilt correction in Embodiment 1.

### DESCRIPTION OF THE EMBODIMENTS

Exemplary embodiments of the present invention will hereinafter be described with reference to the accompanying drawings.

### [Embodiment 1]

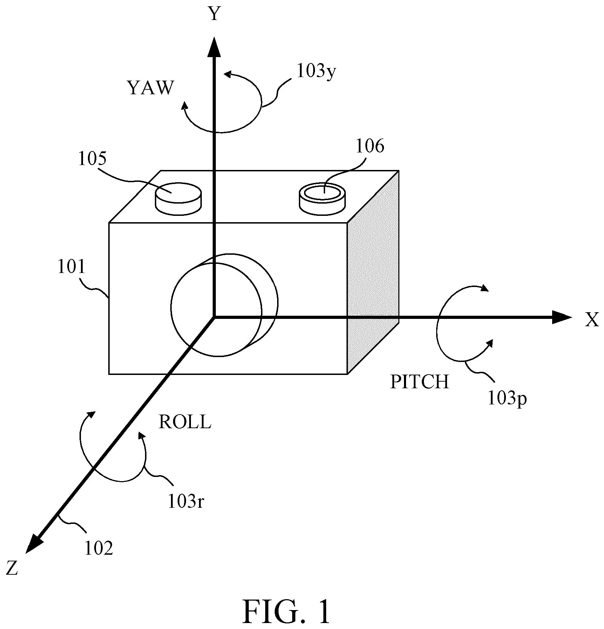

FIG. 1 illustrates an external view of a digital still camera (hereinafter referred to as "a camera") 101 as an image capturing apparatus in a first embodiment (Embodiment 1) of the present invention. FIG. 1 further illustrates directions of tilt and shake of the camera 101 (the shake is hereinafter referred to as "camera shake"). An optical axis 102 of an image capturing optical system of the camera 101 is defined as a Z axis, and a direction in which the Z axis extends is defined as a Z direction. A direction 103r around the Z axis is defined as a roll direction. Of the two axes orthogonal to the Z axis and orthogonal to each other, one is defined as an X axis and the other is defined as a Y axis. A direction in which the X axis extends is defined as an X direction, a direction in which the Y axis extends is defined as a Y direction, a direction around the X axis 103p is defined as a pitch direction, and a direction 103y around the Y axis is defined as a yaw direction. As will be described in detail later, the camera 101 of this embodiment has a function of correcting, by image processing, a tilt of a captured image caused by the tilt of the camera 101 in the roll direction and a function of correcting blur of the captured image caused by the camera shake in the roll, pitch and yaw directions.

Although this embodiment describes the digital still camera as the image capturing apparatus, various image capturing apparatuses such as a digital video camera, a mobile phone, a tablet, a surveillance camera and a Web camera are also included in embodiments of the present invention.

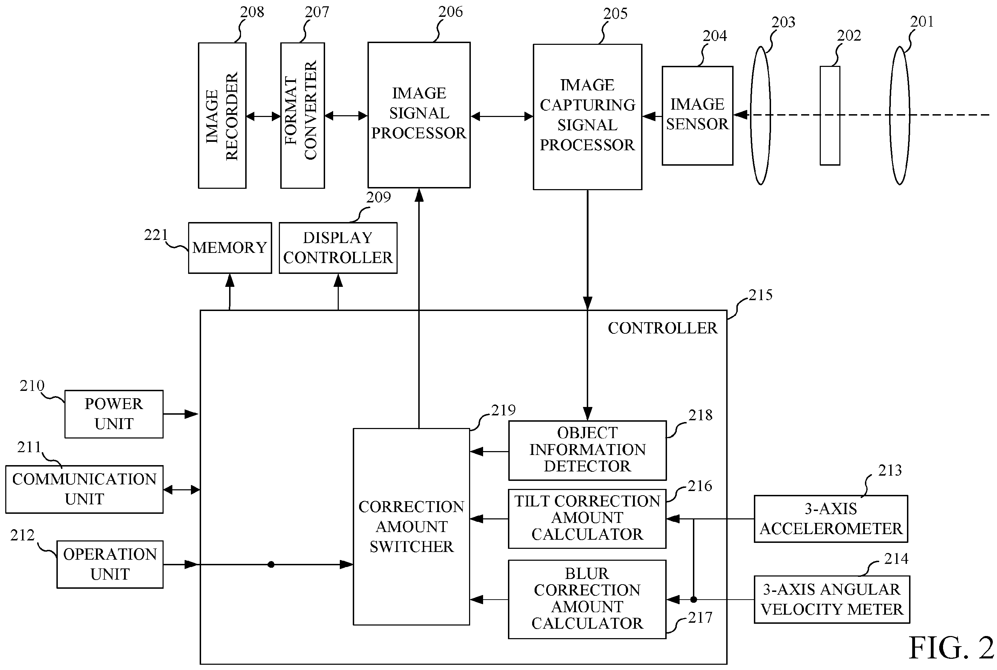

FIG. 2 illustrates an internal configuration of the camera 101. The image capturing optical system includes a magnification-varying lens 201, an aperture stop/shutter unit 202, and a focus lens 203 arranged in order from an object side (right side in the drawing). The magnification-varying lens 201 and the focus lens 203 respectively move in the Z direction (optical axis direction) to perform variation of magnification and focusing. The aperture stop/shutter unit 202 has a stop function for adjusting a light amount and a shutter function for controlling an exposure amount of an image sensor 204 described later. The image capturing optical system causes light from an object (not illustrated) to form an optical image (object image).

The image sensor 204 constituted by a CCD sensor or a CMOS sensor captures (photoelectrically converts) the object image formed by the image capturing optical system to output an analog image capturing signal to an image capturing signal processor 205.

The image capturing signal processor 205 converts the analog image capturing signal from the image sensor 204 into image data as a digital signal to output it to an image signal processor 206 and a controller 215.

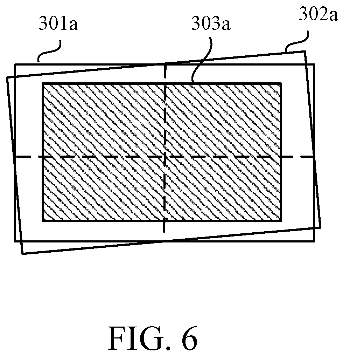

The image signal processor 206 performs image processes such as a distortion correction process, a white balance adjustment process and a color interpolation process on the image data from the image capturing signal processor 205 to generate image data as a captured image. Further, the image signal processor 206 performs a tilt correction process that corrects (reduces) the tilt of the image data caused by the tilt of the camera 101 with respect to a horizontal direction or a gravity direction in the roll direction. Specifically, the image signal processor 206 performs a rotation process and an enlargement process on the image data as illustrated in FIG. 6 depending on a tilt correction amount set by a correction amount switcher 219 described later. The processed image data is output to a format converter 207. The tilt correction process is hereinafter simply referred to as "tilt correction".

In FIG. 6, image data 301a is original image data generated by the image signal processor 206 before the tilt correction. Image data 302a is tilt-corrected image data generated by the tilt correction performed on the image data 301a by the image signal processor 206. The image signal processor 206 clips, from the tilt-corrected image data 302a, a partial area (clipping area) having the same aspect ratio as that of the original image data 301a to generate output image data 303a. The image signal processor 206 further enlarges the output image data 303a to the same size as that of the original image data 301a.

Furthermore, the image signal processor 206 performs a roll blur correction process for correcting (reducing) the blur of the image data (hereinafter referred to as "roll blur") caused by the camera shake in the roll direction. Specifically, the image signal processor 206 performs the same process as that in the tilt correction described above depending on a blur correction amount calculated by a blur correction amount calculator 217 described later, and outputs the processed image data to the format converter 207. The roll blur correction process is hereinafter simply referred to as "roll blur correction".

The image signal processor 206 can also correct blur of the image data (shift blur) caused by the camera shake in the pitch and yaw directions detectable by a three-axis angular velocity meter 214 by clipping a part (clipping area) of the image data and enlarging the clipping area. However, such blur correction performed by the image signal processor 206 for correcting the blur of the image data caused by the camera shake in the roll, pitch and yaw directions can reduce blur between continuous images, but cannot reduce blur during exposure.

The format converter 207 converts the image data output from the image signal processor 206 into image data in a recording format such as a JPEG format to output the image data to an image recorder 208.

The image recorder 208 records the image data in the recording format to a recording medium such as a non-volatile memory. A display controller 209 displays the image data generated by the image signal processor 206 on a display device such as a liquid crystal display element (LCD).

The camera 101 is provided with a three-axis accelerometer 213 as a tilt detector and the three-axis angular velocity meter 214 mentioned above as a shake detector. The three-axis accelerometer 213 detects an acceleration in each of the X, Y and Z directions to output an acceleration signal to the controller 215. The three-axis angular velocity meter 214 detects an angular velocity in each of the pitch, yaw and roll directions to output an angular velocity signal to the controller 215. The acceleration detected by the three-axis accelerometer 213 corresponds to information on the tilt of the camera 101, and the angular velocity detected by the three-axis angular velocity meter 214 corresponds to information on the shake of the camera 101 (camera shake).

The controller 215 as a control unit is a computer constituted by a CPU, a memory and the like, and controls the entire camera 101. A power unit 210 supplies power necessary for operations of the camera 101. A communication unit 211 has a terminal for inputting/outputting a communication signal or a video signal to and from an external apparatus (not illustrated), and has a wireless module for performing wireless communication with the external apparatus. An operation unit 212 includes operation members that are operated by a user for making various settings of the camera 100 and inputting various instructions to the camera 101. A shutter button 105 and a mode dial 106 illustrated in FIG. 1 are also included in the operation unit 212.

A user's half-press operation of the shutter button 105 inputs an image capturing preparation instruction to the controller 215, and thereby the controller 215 performs an image capturing preparation process such as autofocus (AF) control and automatic exposure (AE) control. Further, a user's full-press operation of the shutter button 105 inputs an image capturing instruction to the controller 215, and thereby the controller 215 controls the aperture stop/shutter unit 202 to perform an image capturing process for generating a recording captured image. A user's rotation operation of the mode dial 106 causes the controller 215 to set (change) an image capturing mode.

The controller 215 includes a tilt correction amount calculator 216, a blur correction amount calculator 217, an object information detector 218, and the correction amount switcher 219 mentioned above. The tilt correction amount calculator 216 calculates, by using the acceleration signal from the three-axis accelerometer 213, the tilt correction amount (angle) to be used in the tilt correction for the image data. The blur correction amount calculator 217 calculates, by using the angular velocity signal from the three-axis angular velocity meter 214, the blur correction amount to be used in the blur correction for the image data.

The object information detector 218 as an object information acquiring unit detects an object included in the image data from the image capturing signal processor 205 to acquire information on the object (hereinafter referred to as "object information"). Examples of the object information will be described later. The object information detector 218 may perform learning of objects to be detected in advance using Convolutional Neural Networks (CNN) or the like, and acquire the object information with a method of applying CNN to face recognition or object recognition. Further, the object information detector 218 may acquire the object information on an object set by the user via the operation unit 212 or via an external apparatus capable of communicating with the camera 101.

The tilt correction amount calculator 216 calculates, from the acceleration detected by the three-axis accelerometer 213, the tilt correction amount (angle) for correcting the tilt generated in the image data due to the tilt of the camera 101 in the roll direction. The tilt correction amount corresponds to an angle difference from a reference angle. The blur correction amount calculator 217 calculates, from the angular velocity detected by the three-axis angular velocity meter 214 and a position of the magnification-varying lens 201 detected by a zoom position sensor (not illustrated) (that is, a focal length of the image capturing optical system), the blur correction amount for correcting the blur generated in the image data due to the camera shake in the roll, pitch and yaw directions.

The correction amount switcher 219 calculates, depending on the object information, a tilt correction permissible amount that is a permissible value (upper limit) of the tilt correction amount. Further, the correction amount switcher 219 switches the tilt correction amount to be output to the image signal processor 206 depending on the tilt correction permissible amount, the tilt correction amount from the tilt correction amount calculator 216 and the like. The correction amount switcher 219 may switch the tilt correction amount to be output to the image signal processor 206 in response to a user's operation of the operation unit 212.

The tilt correction amount calculator 216, the blur correction amount calculator 217, the correction amount switcher 219 and the image signal processor 206 constitute a correction unit, and they and the object information detector 218 constitute an image processing apparatus.

Although this embodiment describes the case where the image processing apparatus is provided in the camera 101, a personal computer may be an image processing apparatus by having functions of the tilt correction amount calculator 216, the blur correction amount calculator 217, the correction amount switcher 219, the image signal processor 206 and the object information detector 218.

A non-volatile memory (EEPROM) 221 is a memory that is electrically erasable and recordable, and stores constants, computer programs and the like to be used for operations of the controller 215.

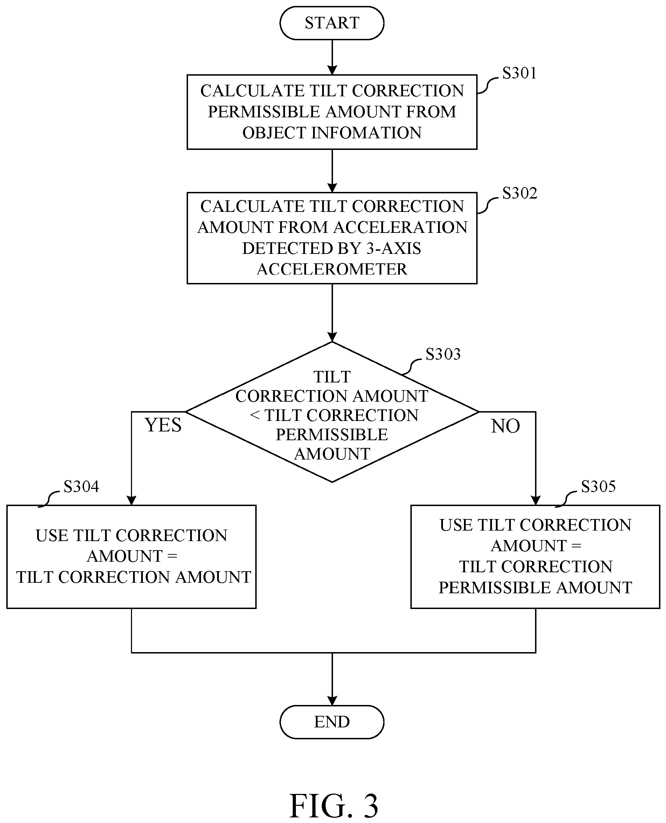

FIG. 3 is a flowchart of a correction amount switching process executed by the controller 215 (specifically, the tilt correction amount calculator 216 and the correction amount switcher 219) according to a computer program. In this embodiment, the tilt correction amount to be used by the image signal processor 206 for the tilt correction (hereinafter referred to as "a use tilt correction amount") is set as follows. In the following description, "S" means a step.

At S301, the correction amount switcher 219 calculates (sets) the tilt correction permissible amount depending on the object information from the object information detector 218. The tilt correction permissible amount is a permissible amount (upper limit) of the tilt correction amount as a rotation amount when rotating the clipping area clipped from the image data in the tilt correction, and is calculated depending on characteristics of the object indicated by the object information. Specifically, the correction amount switcher 219 calculates a larger tilt correction permissible amount when the object information indicates an object whose degree of necessity of the tilt correction is high than when the object information indicates an object whose degree of necessity of the tilt correction is low. The object whose degree of necessity of the tilt correction indicated by the object information is high is, for example, a) an architectural structure such as a building and a tower, b) an object whose vertical extension should be emphasized such as a forest, c) an object whose horizontal extension should be emphasized such as a horizontal line, a horizon and a staircase seen from front, and d) a group of persons.

On the other hand, the correction amount switcher 219 calculates a smaller tilt correction permissible amount when the object information indicates an object whose degree of necessity of the tilt correction is low (in other words, the tilt of the object does not become a matter) than when the object information indicates the above-described object whose degree of necessity of the tilt correction is high. The object whose degree of necessity of the tilt correction indicated by the object information is low is, for example, a close-up face, a close-up flower, and an aerial photograph.

As described above, in this embodiment, the correction amount switcher 219 sets a first tilt correction permissible amount (larger tilt correction permissible amount) when the object information indicates an object whose degree of necessity of the tilt correction is high, and sets a second tilt correction permissible amount smaller than the first tilt correction permissible amount when the object information indicates an object whose degree of necessity of the tilt correction is low.

Next, at S302, the tilt correction amount calculator 216 calculates a tilt angle of the camera 101 from the acceleration detected by the three-axis accelerometer 213, and calculates the tilt correction amount with respect to the image data (captured image) generated by the camera 101 at the detected tilt angle.

Next, at S303, the correction amount switcher 219 compares the tilt correction amount calculated by the tilt correction amount calculator 216 with the tilt correction permissible amount calculated at S301. As a result of this comparison, the correction amount switcher 219 proceeds to S304 when the tilt correction amount is smaller than the tilt correction permissible amount, and proceeds to S305 when the tilt correction amount is equal to or more than the tilt correction permissible amount.

At S304, the correction amount switcher 219 sets the tilt correction amount calculated by the tilt correction amount calculator 216 as the use tilt correction amount to output it to the image signal processor 206. On the other hand, at S305, the correction amount switcher 219 sets the tilt correction permissible amount as the use tilt correction amount to output it to the image signal processor 206.

Description will herein be made of the calculation of the use tilt correction amount when a person's face is indicated by the object information with reference to the flowchart of FIG 3. When calculating the use tilt correction amount only from the person's face indicated by the object information, the correction amount switcher 219 calculates at S301 the tilt correction permissible amount from information on a size of the person's face (face size) in an image capturing area detected by the object information detector 218. When the face size is smaller than a threshold (predetermined value), the proportion of the person's face in the image capturing area is small, so that the possibility is high that a landscape or a building whose degree of necessity of the tilt correction is high is captured in the background. Therefore, the correction amount switcher 219 determines that the degree of necessity of the tilt correction is high to calculate a large tilt correction permissible amount (first permissible value).

On the other hand, when the face size is as large as the threshold or more, the proportion of the person's face in the image capturing area is large, so that the degree of necessity (importance) of the tilt correction is low even if the background is a landscape or a building. Therefore, the correction amount switcher 219 calculates a small tilt correction permissible amount (second permissible value smaller than the first permissible value).

Next, at S302, as described above, the tilt correction amount calculator 216 calculates the tilt angle of the camera 101 from the acceleration detected by the three-axis accelerometer 213, and calculates the tilt correction amount with respect to the image data (captured image) generated by the camera 101 at the detected tilt angle.

Next, at S303, as described above, the correction amount switcher 219 compares the tilt correction permissible amount calculated at S301 with the tilt correction amount calculated by the tilt correction amount calculator 216 to set the use tilt correction amount. Description will herein be made of a case where multiple person's faces are detected at S301. In this case, at S301, the object information detector 218 calculates an average of the detected sizes of the multiple person's faces. The correction amount switcher 219 calculates the tilt correction permissible amount depending on the average of the face sizes detected by the object information detector 218.

The correction amount switcher 219 may calculate a total face area that is a sum of the face sizes, calculate the ratio of the total face area in the image capturing area, and calculate the tilt correction permissible amount depending on the ratio. Alternatively, the correction amount switcher 219 may calculate the tilt correction permissible amount depending on an average of the sizes of only the faces determined as main objects among the multiple person's faces, or may calculate the tilt correction permissible amount depending on the maximum face size among the multiple person's faces.

Next, at S304, the correction amount switcher 219 compares the tilt correction permissible amount calculated at S301 depending on the multiple person's face sizes with the tilt correction amount calculated by the tilt correction amount calculator 216 to set the use tilt correction amount.

At S301, the object information detector 218 may detect a position of the person's face (face position) in the image capturing area in addition to the face size. In this case, the correction amount switcher 219 may compare a face position tilt correction permissible amount calculated from the face position such that the face is not out of the clipping area when the tilt correction is performed, with a face size tilt correction permissible amount calculated from the face size, and set a smaller tilt correction permissible amount as the tilt correction permissible amount to be used (use tilt correction permissible amount).

As described above, this embodiment sets, in the tilt correction, the use tilt correction amount equal to or smaller than the tilt correction permissible amount calculated depending on the degree of necessity of the tilt correction for the object. As a result, this embodiment can provide, from a captured image of an object whose degree of necessity of the tilt correction is high, an image whose tilt is well corrected. Further, this embodiment can provide, from a captured image of an object whose degree of necessity of the tilt correction is low, an image whose tilt may not be well corrected but whose image quality is good.

Although this embodiment described an example of switching the tilt correction permissible amount between the object whose degree of necessity of the tilt correction is high and the object whose degree of necessity of the tilt correction is low, more tilt correction permissible amounts may be set. For example, the tilt correction permissible amounts may be set depending on types of objects (a building, a tree, a person, etc.) whose degree of necessity of the tilt correction is high. Similarly, the tilt correction permissible amounts may be set depending on types of objects (a face, a flower, an aerial photograph, etc.) whose degree of necessity of the tilt correction is low.

In addition, the above-described setting of the use tilt correction permissible amount depending on the size, number and position of the person's face can be applied to a case where the object is a plant or an animal. In the case where the object is a plant, the use tilt correction permissible amount may be set by replacing the person's face with a petal area of the plant. In the case where the object is an animal, the use tilt correction permissible amount may be set by replacing the person's face with an animal's face or the entire animal's body.

Further, although this embodiment detects the camera shake by the shake detector provided in the camera 101, the camera shake may be detected by analyzing the image data using an external apparatus provided outside the camera 101. In this case, the detected camera shake may be input from the external apparatus to the controller 215 (the tilt correction amount calculator 216 and the blur correction amount calculator 217) via the communication unit 211. Further, the tilt detection and the shake detection may use the three-axis accelerometer 213 and the three-axis angular velocity meter 214 in combination or use another sensor (such as a geomagnetic sensor).

Further, this embodiment calculates the use tilt correction amount by using tilt angles of 0, 90, 180 and 270 degree of the camera 101 calculated from the acceleration detected by the three-axis accelerometer 213 as reference tilt angles. The reference tilt angles are as follows. When the tilt angle is -45 (315) degree or more and less than 45 degree, the reference tilt angle is 0 deg. When the tilt angle is 45 degree or more and less than 135 degree, the reference tilt angle is 90 degree. When the tilt angle is 135 degree or more and less than 225 (-135) degree, the reference tilt angle is 180 degree. When the tilt angle is 225 degree or more and less than 315 (-45) degree, the reference tilt angle is 270 degree.

For example, when the tilt angle is 10 degree, the use tilt correction amount is calculated as -10 degree by using the reference tilt angle of 0 degree. When the tilt angle is -10 (350) degree, the use tilt correction amount is calculated as 10 degree by using the reference tilt angle of 0 degree. When the tilt angle is 100 degree, the use tilt correction amount is calculated as -10 degree by using the reference tilt angle of 90 degree. When the tilt angle is 80 degree, the use tilt correction amount is calculated as 10 degree by using the reference tilt angle of 90 degree. When the tilt angle is 190 (-170) degree, the use tilt correction amount is calculated as -10 degree by using the reference tilt angle of 180 degree. When the tilt angle is 170 degree, the use tilt correction amount is calculated as 10 degree by using the reference tilt angle of 180 degree. When the tilt angle is 280 (-80) degree, the use tilt correction amount is calculated as -10 degree by using the reference tilt angle of 270 degree. When the tilt angle is 260 (-100) degree, the use tilt correction amount is calculated as 10 degree by using the reference tilt angle of 270 degree.

As described above, this embodiment changes the reference tilt angle (reference value) when correcting the tilt with respect to the reference value in the tilt correction depending on the posture of the camera 101. Thereby, this embodiment can appropriately perform the tilt correction on the image data while reflecting a user's intended image capturing posture such as a vertical image capturing posture and a horizontal image capturing posture.

### [Embodiment 2]

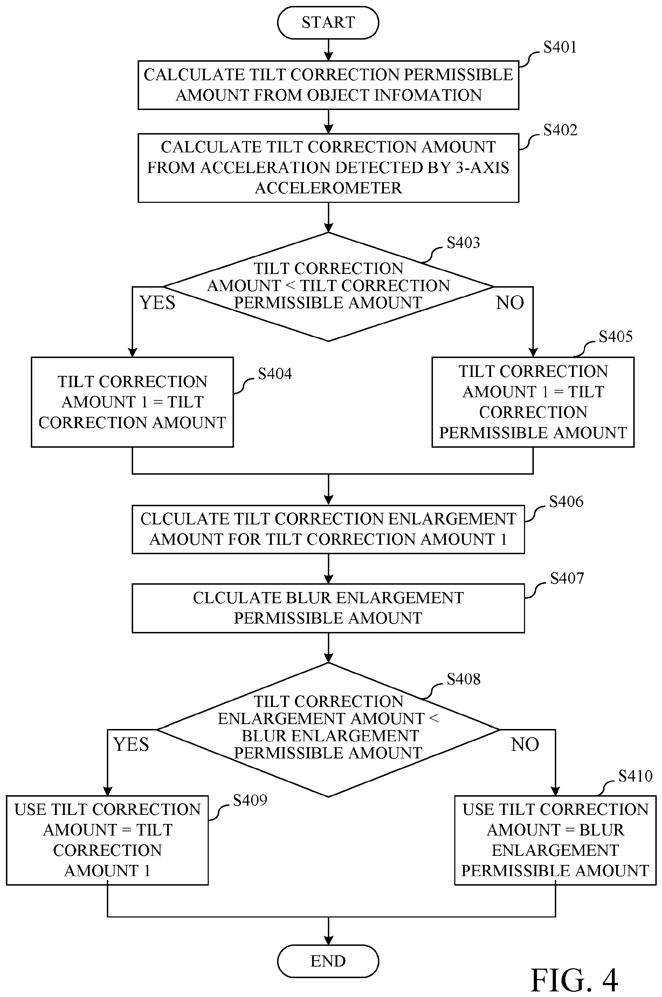

In a second embodiment (Embodiment 2) of the present invention, the use tilt correction amount is switched depending not only on the comparison result between the tilt correction amount and the tilt correction permissible amount described in Embodiment 1, but also on an enlargement permissible amount of the image data. In the switching, a magnitude of the camera shake is also taken into consideration. The camera of this embodiment has the same configuration as that of the camera 101 of Embodiment 1. FIG. 4 is a flowchart of a correction amount switching process executed by the controller 215 (the tilt correction amount calculator 216, blur correction amount calculator 217 and correction amount switcher 219) according to a computer program.

The processes at S401 to S405 are the same as those at S301 to S305 in Embodiment 1 (FIG. 3). However, at S404 and S405, the used tilt correction amount set at S304 and S305 is referred to as "a tilt correction amount 1" in this embodiment.

After the process at S404 or S405 is completed, the correction amount switcher 219 calculates at S406 an enlargement amount of the image data (hereinafter referred to as "a tilt correction enlargement amount") for the tilt correction amount 1 set at S404 or S405.

Next, at S407, the correction amount switcher 219 calculates a blur enlargement permissible amount depending on information on the camera shake from the blur correction amount calculator 217. The blur enlargement permissible amount is a permissible vale (upper limit) of an enlargement amount for enlarging the clipping area of the image data in the tilt correction, which is calculated in consideration of a degree of visibility of blur generated in the image data.

Specifically, when the camera shake is large, greatly enlarging the image (clipping area) in the tilt correction makes the blur generated in the image data highly visible. Therefore, when the camera shake is large, the correction amount switcher 219 sets a smaller blur enlargement permissible amount than when the camera shake is small, thereby limiting image enlargement in the tilt correction. When setting the blur enlargement permissible amount, the correction amount switcher 219 may take the object information in consideration or may use the object information instead of the information on the camera shake. For example, when the object information indicates an object whose uplifting feeling is to be emphasized, a moving object tracked by the camera, or an object whose brightness is dark, the blur of the object in the image data tends to be large. Therefore, when the object information indicates such objects, the correction amount switcher 219 may set a small blur enlargement permissible amount.

On the other hand, when the camera shake is small, even if the image is greatly enlarged in the tilt correction, the blur generated in the image data is not so visible. Therefore, when the camera shake is small, the correction amount switcher 219 sets a larger blur enlargement permissible amount than when the camera shake is large, thereby allowing image enlargement in the tilt correction.

When the object information indicates the object whose degree of necessity of the tilt correction is low described in Embodiment 1 such as a stationary object, a landscape or a bright object, blur of the object in the image data tends to be small. Therefore, when the object information indicates these objects, the correction amount switcher 219 may set a large blur enlargement permissible amount.

Next, at S408, the correction amount switcher 219 compares the tilt correction enlargement amount calculated at S406 with the blur enlargement permissible amount calculated at S407. As a result of this comparison, when the tilt correction enlargement amount is smaller than the blur enlargement permissible amount, the correction amount switcher 219 proceeds to S409, and when the tilt correction enlargement amount is equal to or more than the blur enlargement permissible amount, the correction amount switcher 219 proceeds to S410.

At S409, the correction amount switcher 219 sets the tilt correction amount 1 as the use tilt correction amount to output it to the image signal processor 206. On the other hand, at S410, the correction amount switcher 219 sets the tilt correction amount corresponding to the blur enlargement permissible amount as the use tilt correction amount to output it to the image signal processor 206.

As described above, this embodiment sets, in the tilt correction, the use tilt correction amount equal to or lower than the tilt correction permissible amount calculated depending on the degree of necessity of the tilt correction for the object, and further resets the use tilt correction amount depending on the blur enlargement permissible amount for the image data. As a result, this embodiment can provide, when an captured image includes an object whose degree of necessity of the tilt correction is high and the image enlargement in the tilt correction is allowed, an image whose tilt is well corrected. On the other hand, this embodiment can provide, when an captured image includes an object whose degree of necessity of the tilt correction is low and the image enlargement in the tilt correction is limited, an image whose tilt may not be well corrected but whose image quality is good.

Also in this embodiment, as in Embodiment1, more tilt correction permissible amounts and more blur enlargement permissible amounts may be set.

### [Embodiment 3]

Although Embodiments 1 and 2 described the case where the tilt correction is performed using the object information and the detected acceleration or angular velocity, a third embodiment (Embodiment 3) of the present invention will describe control of a camera that performs the tilt correction in an automatic image capturing process (hereinafter simply referred to as "automatic image capturing"). In the camera that performs the automatic image capturing, image capturing is automatically performed without user's confirmation of captured images, so that the possibility that a lot of tilted captured images are generated is high. Therefore, it is desirable to perform the tilt correction on the captured images.

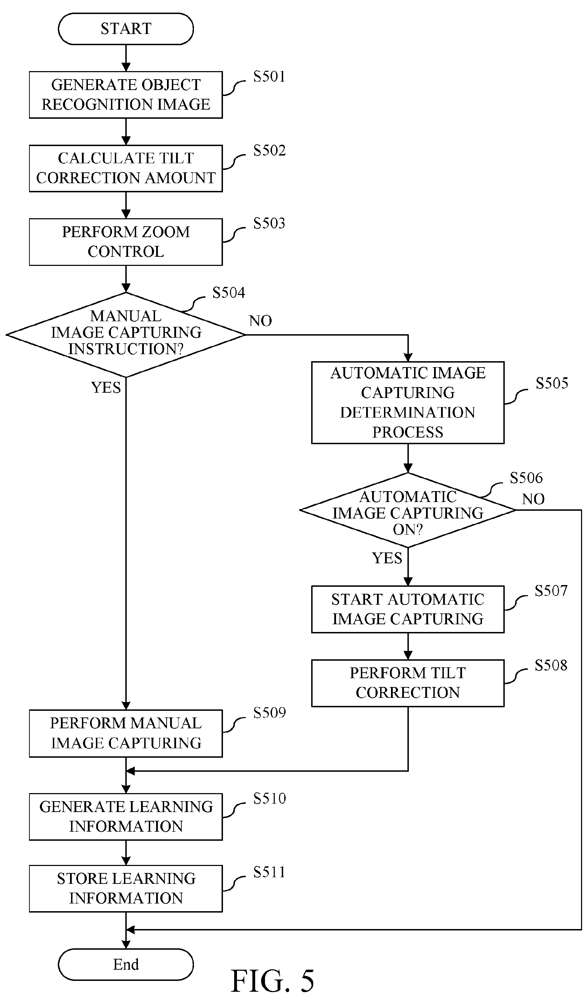

The camera of this embodiment has the same configuration as that of the camera 101 of Embodiment 1. FIG. 5 is a flowchart of a control process performed in the camera performing the automatic image capturing. The controller 215 executes this process according to a computer program.

At S501, the controller 215 causes the image capturing signal processor 205 to generate an object recognition image from the image data to output the object recognition image to the object information detector 218. The object information detector 218 recognizes, from the object recognition image, an object such as a person or a stationary/moving object to generate the object information. When recognizing a person, the object information detector 218 detects a face or body of the person.

In detection of the face, the object information detector 218 detects, in the object recognition image, an area (face area) that matches a face pattern prepared for determining a person's face. The object information detector 218 also calculates a reliability indicating certainty of the face. The reliability is calculated from, for example, the size of the face area in the object recognition image or the degree of matching with the face pattern. When recognizing the stationary/moving object, it is possible to recognize an object that matches a prepared pattern.

Next, at S502, the controller 215 calculates the tilt correction amount using the acceleration detected by the three-axis accelerometer 213. The controller 215 may calculate at S502 an absolute tilt angle of the camera using the acceleration detected by the three-axis accelerometer 213, and use this absolute tilt angle at S508 described later to calculate the tilt correction amount.

Next, at S503, the controller 215 performs zoom control for driving a zoom drive actuator (not illustrated) to move the magnification-varying lens 201. The controller 215 performs the zoom control depending on the object information acquired at S501.

Next, at S504, the controller 215 determines whether or not a user's manual image capturing instruction has been input. The controller 215 proceeds to S509 when the manual image capturing instruction has been input, and otherwise proceeds to S505. The manual image capturing instruction may be an instruction generated by fully pressing the shutter button 105 or by detecting a tap of the camera (body) by the three-axis accelerometer 213. Alternatively, the manual image capturing instruction may be input through wireless communication from an external apparatus such as a smartphone that is operated by the user via the communication unit 211. At S509, in response to the manual image capturing instruction, the controller 215 executes a manual image capturing process.

On the other hand, at S505, the controller 215 performs an automatic image capturing determination process. In the automatic image capturing determination process, the controller 215 determines whether or not the user will preview captured images through the display device. When the user will not preview the captured images, the controller 215 sets execution (ON) of the automatic image capturing. The case where the user will not preview the captured images is, for example, a case where the display device for preview is turned off, a case where the display device is provided in the camera, but the user is not looking at the display device, and a case where the display device is not provided in the camera. Further, when an image capturing instruction as a voice command is input, the controller 215 may set the execution of the automatic image capturing.

At S506, the controller 215 determines whether or not the execution of the automatic image capturing has been set at S505. The controller 215 proceeds to S507 when the execution has been set, and otherwise ends the present process.

At S507, the controller 215 starts the automatic image capturing. Next, at S508, the controller 215 performs the correction amount switching process described in Embodiment 1 or 2, and causes the image signal processor 206 to perform the tilt correction on the captured image.

The controller 215 having proceeded from S509 or S508 to S510 generates, using a state of the camera in image capturing and the captured images, information to be used for a learning process described later (hereinafter referred to as "learning information"). The learning information includes a zoom magnification in image capturing, an object recognition result in the captured image, a face detection result, number of faces included in the captured image, a degree of smiling, a degree of eye closure, a face angle, a face recognition (ID) number, and a line-of-sight angle of a person object.

The learning information may further include a determination result of an image capturing scene, an elapsed time from previous image capturing, an image capturing clock time, position information of the camera acquired by GPS or the like, a position change amount from previous image capturing, a voice level in image capturing, a person making a voice, the presence or absence of applause, and whether or not cheers are raised.

Moreover, the learning information may include camera shake information (acceleration, whether or not using a tripod), environmental information (temperature, atmospheric pressure, illuminance, humidity, amount of ultraviolet rays), and information indicating whether or not performing image capturing in response to the manual image capturing instruction. The controller 215 also calculates a score as an output of a neural network that quantifies a user's image preference.

This score becomes higher as the tilt-corrected image is closer to an image intended by the user. It can be said that the tilt-corrected image having a high score is corrected as intended by the user. Therefore, when setting the tilt correction permissible amount and the blur enlargement permissible amount depending on the object, the same setting as that for a high-score image makes it possible to perform the tilt correction more accurately as intended by the user.

The high-score image is, for example, a captured image to which a high score is manually added by the user, a captured image acquired by being transmitted from an external device capable of communication with the camera in response to a user's instruction, and a captured image stored in an external device capable of communication with the camera. In addition, the high-score image is, for example, a captured image uploaded to a server by the user, and a captured image whose parameters are changed (that is, edited) by the user.

The controller 215 that has generated the learning information at S511 records the learning information as tag information to a captured image file or records it in the non-volatile memory 221.

The image signal processor 206 selects an important object in the captured image, reads the learning information for the important object from the recorded learning information, and sets the tilt correction permissible amount and the blur enlargement permissible amount depending on the read learning information.

As described above, according to this embodiment, even the camera that performs the automatic image capturing can appropriately perform the tilt correction on the captured image depending on the object. Further, the camera provided with the above-described learning function can perform the tilt correction as a user intend in next and subsequent image capturing.

Although this embodiment does not perform the tilt correction when performing the manual image capturing, the tilt correction may be performed when the manual image capturing is performed (after S509). In this case, since image capturing is more likely to be performed with the camera being tilted in the automatic image capturing than in the manual image capturing, the tilt correction permissible amount may be set larger in the automatic image capturing than in the manual image capturing.

For example, although each of the above-described embodiments described the tilt correction in still image capturing, the same tilt correction may be performed in moving image capturing. Further, although each of the above-described embodiments described the tilt correction in detail, blur correction may be performed together with the tilt correction. Moreover, when the camera is provided with an optical blur correction function that moves a lens in an image capturing optical system or an image sensor with respect to an object, the blur enlargement permissible amount in Embodiment 2 may be calculated based on a remaining blur correction amount after the optical blur correction.

According to each of the above-described embodiments, the tilt correction of the captured image can be appropriately performed depending on the object.

### OTHER EMBODIMENTS

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments, but by the following claims.

## Claims

1. An image processing apparatus comprising:
a correction unit (206, 216, 217, 219) configured to perform tilt correction on image data (301a) generated by an image capturing apparatus (101); and
an object information acquiring unit (218) configured to acquire information on an object included in the image data (301a), the information including type of the object or a size of the object,
**characterized in that**
the correction unit (206, 216, 217, 219) is configured to
set a permissible value of a tilt correction amount depending on the type or size of the object,
receive information on a tilt of the image capturing apparatus (101) around an optical axis (102) from a tilt detector (213) provided in the image capturing apparatus (101),
calculate a tilt correction amount from the information on the tilt,
compare the tilt correction amount with the permissible value,
perform the tilt correction using the tilt correction amount if the tilt correction amount is smaller than the permissible value, and
perform the tilt correction using the permissible value if the tilt correction amount is equal to or more than the permissible value,
wherein the correction unit (206, 216, 217, 219) is configured to set the permissible value by determining, from the information on the type or size of the object, a degree of necessity of the tilt correction, and setting a first permissible value when the degree is high and a second permissible value smaller than the first permissible value when the degree is low.

2. The image processing apparatus according to claim 1,
wherein the information on the object includes the type of the object, and
wherein the type of the object includes at least one of a person, a close-up face, an architectural structure, a vertically extending object, a horizontally extending object, and an aerial photograph.

3. The image processing apparatus according to claim 1,
wherein the information on the object is the size of the object in an image capturing area, and
wherein the correction unit (206, 216, 217, 219) is configured to set the first permissible value when the size of the object is smaller than a predetermined value, and set the second permissible value when the size of the object is larger than the predetermined value.

4. The image processing apparatus according to claim 3, wherein the correction unit (206, 216, 217, 219) is configured to set, when the information on the object includes multiple objects, the first or second permissible value depending on an average or sum of the sizes of the multiple objects.

5. The image processing apparatus according to claim 1,
wherein the information on the object includes a position of the object in an image capturing area, and
wherein the correction unit (206, 216, 217, 219) is configured to set the permissible value of the tilt correction amount such that the object is not out of a clipping area (303a) of the image data (301a) in the tilt correction.

6. The image processing apparatus according to any one of claims 1 to 5, wherein the correction unit (206, 216, 217, 219) is configured to correct a tilt with respect to a reference value, and to change the reference value depending on a posture of the image capturing apparatus (101).

7. An image capturing apparatus (101) comprising;
an image sensor (204) configured to capture an object image; and
a tilt detector (213) configured to detect information on a tilt of the image capturing apparatus (101) around an optical axis (102),
**characterized by**
the image processing apparatus (206, 216, 217, 219) according to any one of claims 1 to 6.

8. The image capturing apparatus (101) according to claim 7, further comprising a control unit (215) configured to automatically perform an image capturing process without a user's instruction.

9. The image capturing apparatus (101) according to claim 8, further comprising a communication unit (211) configured to communicate with an external apparatus,
wherein the control unit (215) is configured to perform the image capturing process in response to an image capturing instruction transmitted from the external apparatus receiving a user's operation.

10. An image processing method comprising the steps of:
performing tilt correction on image data (301a) generated by an image capturing apparatus (101); and
acquiring information on an object included in the image data (301a), the information including type of the object or a size of the object,
**characterized in that**
the step of performing tilt correction includes
a step (S301) of setting a permissible value of a tilt correction amount in the tilt correction depending on the type or size of the object,
a step (S302) of receiving information on a tilt of the image capturing apparatus (101) around an optical axis (102) and calculating a tilt correction amount from the information on the tilt,
a step (S303) of comparing the tilt correction amount with the permissible value,
a step (S304) of performing the tilt correction using the tilt correction amount if the tilt correction amount is smaller than the permissible value, and
a step (S305) of performing the tilt correction using the permissible value if the tilt correction amount is equal to or more than the permissible value, wherein
the permissible value is set by determining, from the information on the type or size of the object, a degree of necessity of the tilt correction, and setting a first permissible value when the degree is high and a second permissible value smaller than the first permissible value when the degree is low.

11. A computer program comprising instructions which, when executed on a computer, cause the computer to carry out the method of claim 10.

## Patentansprüche

1. Bildbearbeitungsgerät mit:
einer Korrektureinheit (206, 216, 217, 219), die so konfiguriert ist, dass sie an Bilddaten (301a), die von einem Bilderfassungsgerät (101) erzeugt werden, eine Neigungskorrektur vornimmt; und
einer Objektinformationserlangungseinheit (218), die so konfiguriert ist, dass sie Information über ein Objekt erlangt, das in den Bilddaten (301a) enthalten ist, wobei die Information die Art des Objekts oder eine Größe des Objekts umfasst,
**dadurch gekennzeichnet, dass**
die Korrektureinheit (206, 216, 217, 219) so konfiguriert ist, dass sie
einen zulässigen Wert eines Neigungskorrekturbetrags festlegt, der von der Art oder Größe des Objekts abhängt,
von einem Neigungsdetektor (213), der in dem Bilderfassungsgerät (101) vorgesehen ist, Information über eine Neigung des Bilderfassungsgeräts (101) um eine optische Achse (102) empfängt,
aus der Information über die Neigung einen Neigungskorrekturbetrag berechnet,
den Neigungskorrekturbetrag mit dem zulässigen Wert vergleicht,
die Neigungskorrektur unter Verwendung des Neigungskorrekturbetrags vornimmt, falls der Neigungskorrekturbetrag kleiner als der zulässige Wert ist, und
die Neigungskorrektur unter Verwendung des zulässigen Werts vornimmt, falls der Neigungskorrekturbetrag größer oder gleich dem zulässigen Wert ist,
wobei die Korrektureinheit (206, 216, 217, 219) so konfiguriert ist, dass sie den zulässigen Wert festlegt, indem sie anhand der Information über die Art oder Größe des Objekts einen Grad an Notwendigkeit für die Neigungskorrektur feststellt und einen ersten zulässigen Wert festlegt, wenn der Grad hoch ist, und einen zweiten zulässigen Wert festlegt, der kleiner als der erste zulässige Wert ist, wenn der Grad gering ist.

2. Bildbearbeitungsgerät nach Anspruch 1,
wobei die Information über das Objekt die Art des Objekts umfasst und
wobei die Art des Objekts mindestens eines von einer Person, einem Gesicht in Nahaufnahme, einer architektonischen Struktur, einem sich vertikal erstreckenden Objekt, einem sich horizontal erstreckenden Objekt und einer Luftbildaufnahme umfasst.

3. Bildbearbeitungsgerät nach Anspruch 1,
wobei die Information über das Objekt die Größe des Objekts in einem Bilderfassungsbereich ist und
wobei die Korrektureinheit (206, 216, 217, 219) so konfiguriert ist, dass sie den ersten zulässigen Wert festlegt, wenn die Größe des Objekts kleiner als ein vorbestimmter Wert ist, und den zweiten zulässigen Wert festlegt, wenn die Größe des Objekts größer als der vorbestimmte Wert ist.

4. Bildbearbeitungsgerät nach Anspruch 3, wobei die Korrektureinheit (206, 216, 217, 219) so konfiguriert ist, dass sie, wenn die Information über das Objekt mehrere Objekte umfasst, den ersten oder zweiten zulässigen Wert abhängig von einem Mittelwert oder einer Summe der Größen der mehreren Objekte festlegt.

5. Bildbearbeitungsgerät nach Anspruch 1,
wobei die Information über das Objekt eine Position des Objekts in einem Bilderfassungsbereich umfasst und
wobei die Korrektureinheit (206, 216, 217, 219) so konfiguriert ist, dass sie den zulässigen Wert des Neigungskorrekturbetrags derart festlegt, dass das Objekt bei der Neigungskorrektur nicht außerhalb eines Beschnittbereichs (303a) der Bilddaten (301a) liegt.

6. Bildbearbeitungsgerät nach einem der Ansprüche 1 bis 5, wobei die Korrektureinheit (206, 216, 217, 219) so konfiguriert ist, dass sie eine Neigung bezüglich eines Bezugswerts korrigiert und den Bezugswert abhängig von einer Haltung des Bilderfassungsgeräts (101) ändert.

7. Bilderfassungsgerät (101) mit:
einem Bildsensor (204), der so konfiguriert ist, dass er ein Objektbild erfasst; und
einem Neigungsdetektor (213), der so konfiguriert ist, dass er Information über eine Neigung des Bilderfassungsgeräts (101) um eine optische Achse (102) erfasst,
**gekennzeichnet durch**
das Bildbearbeitungsgerät (206, 216, 217, 219) gemäß einem der Ansprüche 1 bis 6.

8. Bilderfassungsgerät (101) nach Anspruch 7, das außerdem eine Steuereinheit (215) umfasst, die so konfiguriert ist, dass sie automatisch ohne eine Benutzeranweisung einen Bilderfassungsvorgang durchführt.

9. Bilderfassungsgerät (101) nach Anspruch 8, das außerdem eine Kommunikationseinheit (211) umfasst, die so konfiguriert ist, dass sie mit einem externen Gerät kommuniziert,
wobei die Steuereinheit (215) so konfiguriert ist, dass sie den Bilderfassungsvorgang im Ansprechen auf eine Bilderfassungsanweisung durchführt, die von dem externen Gerät übertragen wird, das eine Benutzerbedienung empfängt.

10. Bildbearbeitungsverfahren mit den folgenden Schritten:
Vornehmen einer Neigungskorrektur an Bilddaten (301a), die von einem Bilderfassungsgerät (101) erzeugt werden; und
Erlangen von Information über ein Objekt, das in den Bilddaten (301a) enthalten ist, wobei die Information die Art des Objekts oder eine Größe des Objekts umfasst,
**dadurch gekennzeichnet, dass**
der Schritt Vornehmen der Neigungskorrektur Folgendes umfasst:
einen Schritt (S301), der abhängig von der Art oder Größe des Objekts einen zulässigen Wert eines Neigungskorrekturbetrags bei der Neigungskorrektur festlegt,
einen Schritt (S302), der Information über eine Neigung des Bilderfassungsgeräts (101) um eine optische Achse (102) empfängt und anhand der Information über die Neigung einen Neigungskorrekturbetrag berechnet,
einen Schritt (S303), der den Neigungskorrekturbetrag mit dem zulässigen Wert vergleicht,
einen Schritt (S304), der die Neigungskorrektur unter Verwendung des Neigungskorrekturbetrags vornimmt, falls der Neigungskorrekturbetrag kleiner als der zulässige Wert ist, und
einen Schritt (S305), der die Neigungskorrektur unter Verwendung des zulässigen Werts vornimmt, falls der Neigungskorrekturbetrag größer oder gleich dem zulässigen Wert ist, wobei
der zulässige Wert festgelegt wird, indem anhand der Information über die Art oder Größe des Objekts ein Grad an Notwendigkeit für die Neigungskorrektur festgestellt wird und ein erster zulässiger Wert eingestellt wird, wenn der Grad hoch ist, und ein zweiter zulässiger Wert eingestellt wird, der kleiner als der erste zulässige Wert ist, wenn der Grad gering ist.

11. Computerprogramm, das Anweisungen umfasst, die, wenn sie auf einem Computer ausgeführt werden, den Computer dazu bringen, das Verfahren von Anspruch 10 auszuführen.

## Revendications

1. Appareil de traitement d'image comprenant :
une unité de correction (206, 216, 217, 219) configurée pour réaliser une correction d'inclinaison sur des données d'image (301a) générées par un appareil de capture d'image (101) ; et
une unité d'acquisition d'informations d'objet (218) configurée pour acquérir des informations sur un objet compris dans les données d'image (301a), les informations comprenant le type de l'objet ou une taille de l'objet,
**caractérisé en ce que**
l'unité de correction (206, 216, 217, 219) est configurée pour
définir une valeur admissible d'une quantité de correction d'inclinaison suivant le type ou la taille de l'objet,
recevoir des informations sur une inclinaison de l'appareil de capture d'image (101) autour d'un axe optique (102) à partir d'un détecteur d'inclinaison (213) fourni dans l'appareil de capture d'image (101),
calculer une quantité de correction d'inclinaison à partir des informations sur l'inclinaison,
comparer la quantité de correction d'inclinaison à la valeur admissible,
réaliser la correction d'inclinaison à l'aide de la quantité de correction d'inclinaison si la quantité de correction d'inclinaison est inférieure à la valeur admissible, et
réaliser la correction d'inclinaison à l'aide de la valeur admissible si la quantité de correction d'inclinaison est égale ou supérieure à la valeur admissible,
dans lequel l'unité de correction (206, 216, 217, 219) est configurée pour définir la valeur admissible en déterminant, à partir des informations sur le type ou la taille de l'objet, un degré de nécessité de la correction d'inclinaison, et en définissant une première valeur admissible lorsque le degré est élevé et une seconde valeur admissible inférieure à la première valeur admissible lorsque le degré est faible.

2. Appareil de traitement d'image selon la revendication 1,
dans lequel les informations sur l'objet comprennent le type de l'objet, et
dans lequel le type de l'objet comprend au moins un parmi une personne, un visage en gros plan, une structure architecturale, un objet s'étendant verticalement, un objet s'étendant horizontalement, et une photographie aérienne.

3. Appareil de traitement d'image selon la revendication 1,
dans lequel les informations sur l'objet sont la taille de l'objet dans une zone de capture d'image, et
dans lequel l'unité de correction (206, 216, 217, 219) est configurée pour définir la première valeur admissible lorsque la taille de l'objet est inférieure à une valeur prédéterminée, et définir la seconde valeur admissible lorsque la taille de l'objet est supérieure à la valeur prédéterminée.

4. Appareil de traitement d'image selon la revendication 3, dans lequel l'unité de correction (206, 216, 217, 219) est configurée pour définir, lorsque les informations sur l'objet comprennent de multiples objets, la première ou la seconde valeur admissible suivant une moyenne ou une somme des tailles des multiples objets.

5. Appareil de traitement d'image selon la revendication 1,
dans lequel les informations sur l'objet comprennent une position de l'objet dans une zone de capture d'image, et dans lequel l'unité de correction (206, 216, 217, 219) est configurée pour définir la valeur admissible de la quantité de correction d'inclinaison de telle sorte que l'objet ne soit pas en dehors d'une zone de découpage (303a) des données d'image (301a) lors de la correction d'inclinaison.

6. Appareil de traitement d'image selon l'une quelconque des revendications 1 à 5, dans lequel l'unité de correction (206, 216, 217, 219) est configurée pour corriger une inclinaison par rapport à une valeur de référence, et pour modifier la valeur de référence suivant une posture de l'appareil de capture d'image (101).

7. Appareil de capture d'image (101) comprenant :
un capteur d'image (204) configuré pour capturer une image d'objet ; et
un détecteur d'inclinaison (213) configuré pour détecter des informations sur une inclinaison de l'appareil de capture d'image (101) autour d'un axe optique (102),
**caractérisé par**
l'appareil de traitement d'image (206, 216, 217, 219) selon l'une quelconque des revendications 1 à 6.

8. Appareil de capture d'image (101) selon la revendication 7, comprenant en outre une unité de commande (215) configurée pour réaliser automatiquement un procédé de capture d'image sans instruction d'un utilisateur.

9. Appareil de capture d'image (101) selon la revendication 8, comprenant en outre une unité de communication (211) configurée pour communiquer avec un appareil externe,
dans lequel l'unité de commande (215) est configurée pour réaliser le procédé de capture d'image en réponse à une instruction de capture d'image transmise à partir de l'appareil externe recevant une opération de l'utilisateur.

10. Procédé de traitement d'image comprenant les étapes consistant à :
réaliser une correction d'inclinaison sur des données d'image (301a) générées par un appareil de capture d'image (101) ; et
acquérir des informations sur un objet compris dans les données d'image (301a), les informations comprenant le type de l'objet ou une taille de l'objet,
**caractérisé en ce que**
l'étape consistant à réaliser une correction d'inclinaison comprend
une étape (S301) consistant à définir une valeur admissible d'une quantité de correction d'inclinaison lors de la correction d'inclinaison suivant le type ou la taille de l'objet,
une étape (S302) consistant à recevoir des informations sur une inclinaison de l'appareil de capture d'image (101) autour d'un axe optique (102), et à calculer une quantité de correction d'inclinaison à partir des informations sur l'inclinaison,
une étape (S303) consistant à comparer la quantité de correction d'inclinaison à la valeur admissible,
une étape (S304) consistant à réaliser la correction d'inclinaison à l'aide de la quantité de correction d'inclinaison si la quantité de correction d'inclinaison est inférieure à la valeur admissible, et
une étape (S305) consistant à réaliser la correction d'inclinaison à l'aide de la valeur admissible si la quantité de correction d'inclinaison est égale ou
supérieure à la valeur admissible, dans lequel la valeur admissible est définie en déterminant, à partir des informations sur le type ou la taille de l'objet, un degré de nécessité de la correction d'inclinaison, et en définissant une première valeur admissible lorsque le degré est élevé et une seconde valeur admissible inférieure à la première valeur admissible lorsque le degré est faible.

11. Programme d'ordinateur comprenant des instructions qui, lorsqu'elles sont exécutées sur un ordinateur, amènent l'ordinateur à mettre en œuvre le procédé selon la revendication 10.
